# EUROPEAN PATENT APPLICATION

(11) **EP 4 420 987 A1**
(43) Date of publication of application: **28.08.2024**
(21) Application number: 24154327.1
(22) Date of filing: 29.01.2024
(51) Int. Cl.: B64D 27/40, B64C 1/16

(54) **A PODDED ENGINE ADAPTOR**

(30) Priority: 27.02.2023 GB 202302778
(71) Applicant: Rolls-Royce plc, London N1 9FX (GB)
(72) Inventor: Yeandel, Michael, Derby, DE24 8BJ (GB)
(74) Representative: Rolls-Royce plc

(57) **Abstract**

The present disclosure provides a podded engine adaptor configured to secure a podded engine to an aircraft, comprising: an airframe mounting interface configured for attachment to an airframe of an aircraft; an engine mounting interface configured for attachment to an engine; wherein the podded engine adaptor is configured to be attached to an engine at the engine mounting interface and to an airframe of the aircraft at the airframe mounting interface, so as to indirectly couple an engine to the aircraft via the podded engine adaptor.

## Description

### Field of Invention

The present disclosure relates to a podded engine adaptor, a podded engine assembly, an aircraft comprising a podded engine assembly, and a method of mounting a podded engine to an aircraft.

### Background

Podded aircraft engines are engines that are mounted on the underside of an aircraft's airframe structure, rather than in the traditional location within the fuselage. This configuration allows for a number of benefits, including easier engine removal for maintenance or engine upgrades throughout the life of the aircraft. Podded engines have been used on a number of commercial and military aircraft. Podded engines are common in commercial and civil aircraft in the form of nacelles.

Podded engine assemblies typically include an aircraft engine and an air intake for the engine, each mounted to the airframe of the aircraft. The air intake can have a complex and convoluted structure and can require a complex series of mounts to be attached to the air frame. Similarly, the engine is mounted to the airframe in a manner that allows relative movement with respect to the airframe, such that thermal expansion effects and engine vibration effects are accounted for. These considerations can result a large number of mounts and connections being required to securely attach the podded engine assembly to the aircraft. This also means that engine replacement or reconfiguration can be time consuming and can require a different configuration of mounts and connections.

It is therefore desired to develop a podded engine assembly which addresses at least some of the aforementioned problems.

### Summary

According to a first aspect of the present disclosure, there is provided a podded engine adaptor configured to secure a podded engine to an aircraft, comprising: an airframe mounting interface configured for attachment to an airframe of an aircraft; an engine mounting interface configured for attachment to an engine; wherein the podded engine adaptor is configured to be attached to an engine at the engine mounting interface and to an airframe of the aircraft at the airframe mounting interface, so as to indirectly couple an engine to the aircraft via the podded engine adaptor.

The podded engine adaptor may further comprise an air intake mounting interface configured for attachment to an air intake, wherein the podded engine adaptor may be configured to be attached to an air intake at the air intake mounting interface, so as to indirectly couple an air intake to the aircraft via the podded engine adaptor.

The podded engine adaptor may further comprise an engine housing mounting interface configured for attachment to an engine housing, wherein the podded engine adaptor may be configured to be attached to an engine housing at the air intake mounting interface, so as to indirectly couple an engine housing to the aircraft via the podded engine adaptor.

The podded engine adaptor may be configured such that, when the podded engine adaptor is attached to an engine at the engine mounting interface and when the podded engine adaptor is attached to an air intake at the air intake mounting interface, the engine and the air intake are attached to the podded engine adaptor independently of one another.

The podded engine adaptor may be configured such that when the podded engine adaptor is attached to an engine at the engine mounting interface and when the podded engine adaptor is attached to an air intake at the air intake mounting interface, an engine inlet of the engine is physically separated from the air intake.

The podded engine adaptor may be configured to be movably attached to an engine at the engine mounting interface such that the engine is configured for relative movement with respect to the podded engine adaptor.

The podded engine adaptor may have a substantially plate-like form, having a first surface comprising the airframe mounting interface and a second surface arranged opposing the first surface, the second surface comprising the engine mounting interface. The podded engine adaptor may be configured to be mounted to an underside of the airframe at the airframe mounting interface.

The podded engine adaptor may further comprise a fire-retardant layer configured such that when the podded engine adaptor is attached to an engine at the engine mounting interface and to an airframe of the aircraft at the airframe mounting interface, the fire-retardant layer separates the airframe from the engine.

The podded engine adaptor may further comprise an auxiliary mounting interface configured for attachment to one or more auxiliary engine components, wherein the podded engine adaptor may be configured to be attached to one or more auxiliary engine components at the auxiliary mounting interface so as to indirectly couple one or more auxiliary engine components to the aircraft via the podded engine adaptor.

According to a second aspect of the present disclosure, there is provided a podded engine assembly for an aircraft, comprising: a podded engine adaptor according to the first aspect; an engine attached to the engine mounting interface; an air intake fluidly coupled to an engine inlet and attached to the air intake mounting interface; and an engine housing at least partially surrounding the engine and attached to the engine housing mounting interface; wherein the podded engine adaptor is configured to be attached to an airframe of the aircraft at the airframe mounting interface to indirectly couple the engine, the air intake, and the engine housing to the aircraft.

The air intake may be integrally formed with the engine housing.

According to a third aspect of the present disclosure, there is provided an aircraft, comprising: an airframe; and a podded engine assembly according to the second aspect, wherein the podded engine adaptor of the podded engine assembly is attached to the airframe at the airframe mounting interface to couple the podded engine assembly to the aircraft.

The airframe may comprise a fuselage of the aircraft. The airframe mounting interface may be configured to attach to the fuselage.

According to a fourth aspect of the present disclosure, there is provided a method of mounting a podded engine to an aircraft, comprising: providing a podded engine adaptor according to the first aspect; attaching the podded engine adaptor to an engine at the engine mounting interface; and attaching the podded engine adaptor to an airframe of the aircraft at the airframe mounting interface to indirectly couple the engine to the aircraft via the podded engine adaptor.

The skilled person will appreciate that except where mutually exclusive, a feature described in relation to any one of the above aspects may be applied mutatis mutandis to any other aspect. Furthermore, except where mutually exclusive, any feature described herein may be applied to any aspect and/or combined with any other feature described herein.

### Brief Description of the Drawings

Embodiments will now be described by way of example only, with reference to the Figures, in which:
Figure 1 is a sectional side view of a gas turbine engine;
Figure 2 is a sectional side view of a first example aircraft according to the present disclosure;
Figure 3 is a front section view through the plane marked A-A in Figure 2;
Figure 4 is a sectional side view of two different podded engine assemblies which are configured for attachment to an aircraft;
Figure 5 is a front section view of a second example aircraft according to the present disclosure;
Figure 6 is a sectional side view of a third example aircraft according to the present disclosure; and
Figure 7 is a flow diagram illustrating a method of mounting a podded engine to an aircraft according to the present disclosure.

### Detailed Description

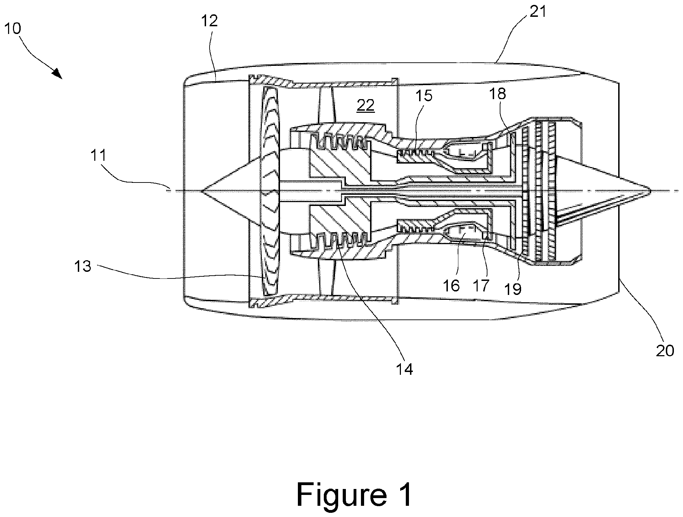

With reference to **Figure 1****,** a gas turbine engine is generally indicated at 10, having a principal and rotational axis 11. The engine 10 comprises, in axial flow series, an air intake 12, a propulsive fan 13, an intermediate pressure compressor 14, a high-pressure compressor 15, combustion equipment 16, a high-pressure turbine 17, an intermediate pressure turbine 18, a low-pressure turbine 19 and an exhaust nozzle 20. A nacelle 21 generally surrounds the engine 10 and defines both the intake 12 and the exhaust nozzle 20.

The gas turbine engine 10 works in the conventional manner so that air entering the intake 12 is accelerated by the fan 13 to produce two air flows: a first air flow into the intermediate pressure compressor 14 and a second air flow which passes through a bypass duct 22 to provide propulsive thrust. The intermediate pressure compressor 14 compresses the air flow directed into it before delivering that air to the high-pressure compressor 15 where further compression takes place.

The compressed air exhausted from the high-pressure compressor 15 is directed into the combustion equipment 16 where it is mixed with fuel and the mixture combusted. The resultant hot combustion products then expand through, and thereby drive the high, intermediate and low-pressure turbines 17, 18, 19 before being exhausted through the nozzle 20 to provide additional propulsive thrust. The high 17, intermediate 18 and low 19 pressure turbines drive respectively the high-pressure compressor 15, intermediate pressure compressor 14 and fan 13, each by suitable interconnecting shaft.

Other gas turbine engines to which the present disclosure may be applied may have alternative configurations. By way of example such engines may have an alternative number of interconnecting shafts (e.g., two) and/or an alternative number of compressors and/or turbines. Further the engine may comprise a gearbox provided in the drive train from a turbine to a compressor and/or fan.

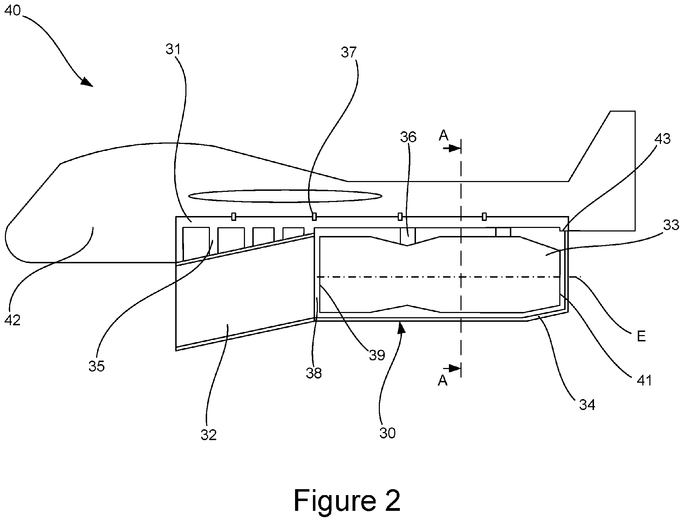

Aircraft engines can include gas turbine engines such as the gas turbine engine described above. The engine can be part of a podded engine assembly which is attached to the aircraft. **Figure 2** shows a first example podded engine assembly 30 which is attached to an aircraft 40. The podded engine assembly 30 comprises an podded engine adaptor 31, an air intake 32, an engine 33, and an engine housing 34.

The podded engine adaptor 31 is configured to secure a podded engine to an aircraft 40. The podded engine adaptor 31 is formed as a plate. By being formed as a plate, the podded engine adaptor 31 has a thin construction relative to the overall height of both the podded engine assembly 30 and the aircraft 40. The podded engine adaptor 31 is configured to form a strongback for the podded engine assembly 30, providing structural support to the podded engine assembly. A "strongback" is a term known in the art which refers to a component which acts as a support member to a larger overall structure. The podded engine adaptor 31 may be formed from a metal or composite material.

The podded engine adaptor 31 comprises an engine mounting interface 36 configured for attachment to an engine 33. The engine mounting interface 36 is formed on an underside surface of the podded engine adaptor 31. The engine 33 is attached to the podded engine adaptor 31 via the engine mounting interface 36. In particular, the engine 33 is attached to the underside of the podded engine adaptor 31. The engine mounting interface 36 may comprise one or more mounts which are configured to attach to an engine 33. The engine 33 may be movably attached to the podded engine adaptor 31 at the engine mounting interface 36 such that the engine 33 is configured for relative movement with respect to the podded engine adaptor 31. The engine mounting interface 36 may be configured to allow linear movement of the engine 33 with respect to the podded engine adaptor 31 parallel to and perpendicular to an engine axis E. The engine axis E extends along an axial centreline of the engine 33. The engine mounting interface 36 may instead or in addition be configured to allow rotational movement of the engine 33 around the engine axis E. Examples of mounts which provide this relative movement can include swing links, coat hanger mounts, and thrust trunnions. In other examples, the engine 33 may be rigidly attached to the podded engine adaptor 31 via the engine mounting interface 36.

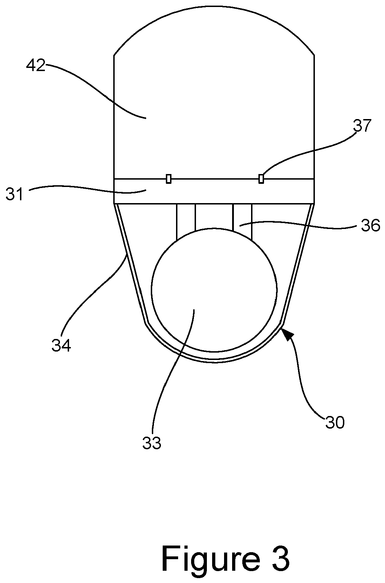

**Figure 3** is a cross-section of the aircraft 40 and podded engine assembly 30 through the plane marked by the line A-A in Figure 2. Figure 3 shows that the engine mounting interface 36 comprises mounts 36 which are distributed along the width of the engine 33, as well as being distributed along the axial length of the engine 33, as shown in Figure 2. The engine 33 may also comprise one or more auxiliary engine components (not shown), or Engine Build Up (EBU) components, mounted thereto. The auxiliary components may be related to the operation of the engine 33 or its accessories and may also be configured to connect the engine 33 and its associated systems with one or more systems of the aircraft 40. The auxiliary components may include an engine starter, hydraulic pumps, electrical generators, an accessory gearbox, and other connecting components which connect the engine 33 to the aircraft 40. The connecting components may include electrical harnesses, electrical cables, hydraulic hoses, fuel tubes and ducts, and air tubes and ducts. The auxiliary components may be mounted to the engine 33.

The podded engine adaptor 31 comprises an engine housing mounting interface 43 configured for attachment to an engine housing 34. The engine 33 is at least partially surrounded by the engine housing 34. In this case, the engine housing 34 is open adjacent to an exhaust 41 of the engine 33 to enable fluid flow from the exhaust 41 to exit the engine housing 34 to the surrounding air. The engine housing 34 extends along the axial length of the engine 33. The engine housing 34 is configured to be attached to the podded engine adaptor 31 at the engine housing mounting interface 43. The engine housing 34 may be rigidly mounted to the podded engine adaptor 31 at the engine housing mounting interface 43.

The podded engine adaptor 31 also comprises an air intake mounting interface 35 configured for attachment to an air intake 32. The air intake mounting interface 35 is formed on an underside surface of the podded engine adaptor 31. The air intake 32 is configured to direct air flow into the engine 33. The air intake 32 is formed as a duct which can direct this airflow. In this example, the air intake 32 forms a duct which is angled with respect to the engine axis E; however, in other examples, the air intake 32 may be arranged parallel to the engine axis E. The air intake 32 is fluidly coupled to an engine inlet 39. However, the air intake 32 is not physically attached to the engine 33 or the engine inlet 39. The air intake 32 is positioned upstream of the engine 33 with respect to a direction of air flow through the engine 33, such that the air intake 32 is positioned adjacent to the engine inlet 39. The air intake 32 is separated from the engine 33 by a clearance 38. The clearance 38 is fluidly sealed. The air intake 32 is attached to the podded engine adaptor 31 at the air intake mounting interface 35. In particular, the air intake 32 is attached at the air intake mounting interface 35 at the underside of the podded engine adaptor 31. The air intake 32 may be rigidly attached to the podded engine adaptor 31 via the air intake mounting interface 35. The air intake mounting interface 35 may comprise one or more rigid mounts 35. The air intake 32 is also attached to the engine housing 34. The air intake 32 may be integrally formed with the engine housing 34. The air intake 32 is therefore configured to mount to the podded engine adaptor 31 independently of the engine 33.

The podded engine adaptor 31 comprises an airframe mounting interface 37 which is configured for attachment to an airframe 42 of an aircraft 40. The airframe mounting interface 37 is formed on a topside surface of the podded engine adaptor 31, the topside surface being arranged opposing the underside surface. The airframe 42 may include the fuselage, undercarriage, or wings of the aircraft 40. The airframe 42 may comprise a corresponding a pod attachment interface 44 configured to attach to the airframe mounting interface 37 of the podded engine adaptor 31. The podded engine adaptor 31 is configured to attach to the airframe 42 at the airframe mounting interface 37 to attach the podded engine assembly 30 to the aircraft 40. In particular, the podded engine adaptor 31 is configured to attach to the airframe 42 at the airframe mounting interface 37 to indirectly couple the engine 33, the air intake 32, and the engine housing 34 to the aircraft 40 via the podded engine adaptor 31. The airframe mounting interface 37 may comprise one or more mounts configured to attach to the pod attachment interface 44 of the airframe 42. The podded engine adaptor 31 is configured to rigidly attach to the airframe 42 at the airframe mounting interface 37. For example, the airframe mounting interface 37 may have one or more features which are configured to couple to the pod attachment interface 44 and the features may be attached to the pod attachment interface 44 by means of bolting, riveting, or welding. The podded engine adaptor 31 is configured to attach to the airframe 42 such that there is no relative movement between the podded engine adaptor 31 and the airframe 42.

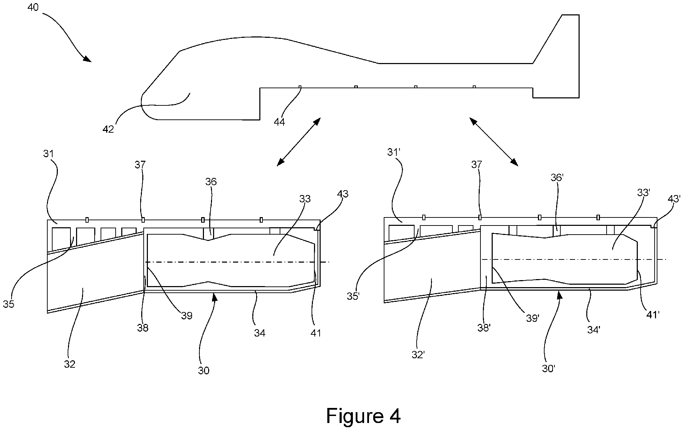

The airframe mounting interface 37 defines a modular attachment interface configured receive a plurality of different podded engine adaptors 31 which are each configured to attach to the pod attachment interface 37. **Figure 4** illustrates an example in which two different podded engine assemblies 30, 30' are both configured for attachment to an airframe 42 of an aircraft 40. The podded engine assemblies 30, 30' comprise similar features to one another, with similar features being denoted by similar reference numerals which differ only in having an additional apostrophe. The podded engine assemblies 30, 30' differ in that the respective podded engine adaptors 31, 31', the respective engines 33, 33', the respective engine mounting interfaces 36, 36', the respective air intakes 32, 32', the respective air intake mounting interfaces 35, 35', and the respective engine housings 34, 34' slightly vary in their configuration. However, the respective podded engine adaptors 31, 31' have the same airframe mounting interface 37 to enable the podded engine adaptors 31, 31' to be mounted to the airframe 42. The airframe mounting interface 37 of each podded engine adaptor 31, 31' is configured to attach to the pod attachment interface 44 of the airframe 42. As the airframe mounting interface 37 is the same between the different podded engine assemblies 30, 30', the podded engine assemblies 30, 30' form modular components which can be interchangeably attached to the airframe 42. The structure of each of the podded engine adaptors can therefore be different as long as they have the same airframe mounting interface 37 to enable attachment to the airframe 42. The podded engine adaptors 31, 31' may therefore be configured to be removably attached to the airframe 42, such that the respective podded engine assemblies can be attached to and removed from the airframe 42 in a modular manner.

The podded engine adaptor 31 is configured to provide structural support to the podded engine assembly 30, in that the engine 33, air intake 32 and engine housing 34 are all attached to the podded engine adaptor 31. The podded engine adaptor 31 is therefore able to support the combined load of these components when the podded engine assembly 34 is not attached to the airframe 42, for example during transportation or maintenance operations. When the podded engine adaptor 31 is attached to the airframe 42, the podded engine adaptor 31 distributes the load of the air intake 32, engine 33, and engine housing 34 across the length and width of the podded engine adaptor 31, such that the load exerted on the airframe 42 is balanced, rather than being concentrated at specific mounting points. The podded engine adaptor 31 therefore only defines a load path for the air intake 32, engine 33, and engine housing 34 to the airframe 42, such that the majority of the load of the air intake 32, engine 33, and engine housing 34 is supported by the airframe 42, rather than the podded engine adaptor 31 itself.

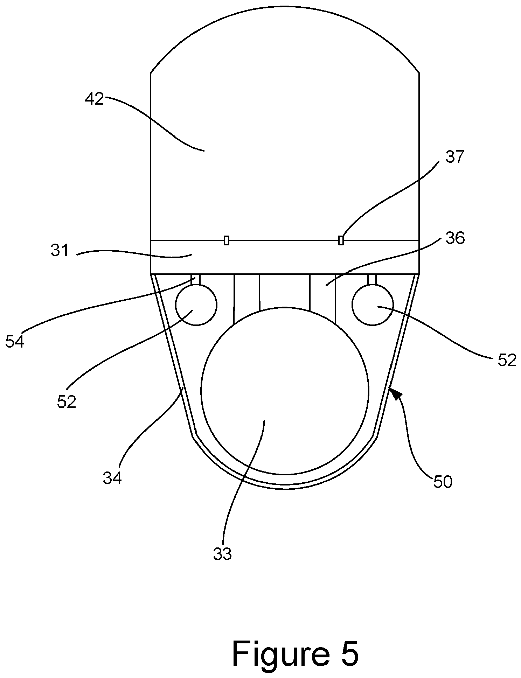

**Figure 5** is an axial cross-section of a second example aircraft and podded engine assembly 50 according to the present disclosure. The second example contains substantially similar features to the first example, with like reference numerals denoting like features. The second example differs from the first example in the mounting of the auxiliary engine components.

The podded engine adaptor 31 comprises an auxiliary mounting interface 54 configured for attachment to one or more auxiliary engine components 52. As shown in Figure 5, instead of being mounted to the engine 33, the auxiliary engine components 52 are configured to be attached directly to the podded engine adaptor 31 at the auxiliary mounting interface 54. The auxiliary mounting interface 54 is formed on an underside surface of the podded engine adaptor 31. For example, the auxiliary engine components 52 may comprise an accessory gearbox attached directly to the podded engine adaptor 31. The auxiliary mounting interface 54 enables the auxiliary engine components 52 to be indirectly coupled to the aircraft via the podded engine adaptor 31.

By mounting the auxiliary engine components 52 directly to the podded engine adaptor 31 instead of to the engine 33, the engine 33 can be removed and replaced more easily from the podded engine assembly 50. This is because the auxiliary components 52 can remain mounted to the podded engine adaptor 31, whilst the engine 33 is replaced. This can also result in a lower aircraft-to-ground clearance being possible, due to the auxiliary components 52 being mounted to the podded engine adaptor 31, rather than being mounted to and positioned under the engine 33.

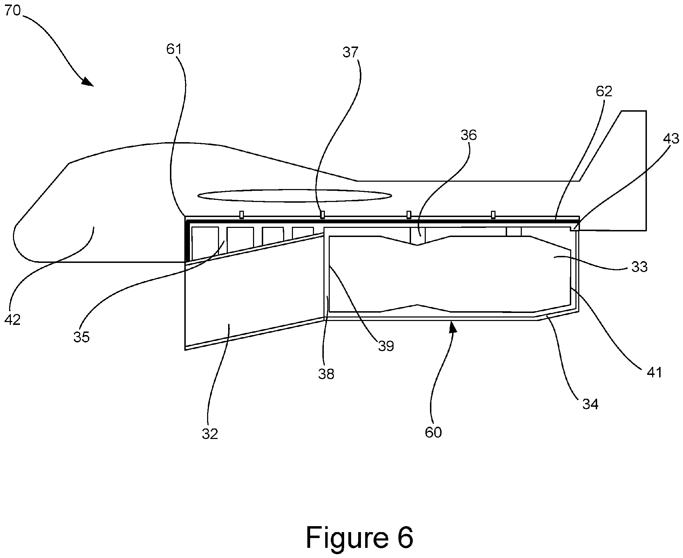

**Figure 6** is a sectional side view of a third example aircraft 70 and podded engine assembly 60 according to the present disclosure. The third example contains substantially similar features to the first and second examples, with like reference numerals denoting like features. The third example differs from the first and second examples by the podded engine adaptor comprising a fire-retardant layer.

As shown in Figure 6, the podded engine adaptor 61 comprises a fire-retardant layer 62 extending along the length of the podded engine adaptor 61. The fire-retardant layer 62 may comprise any suitable fireproof material. These may include metallic or composite materials, such as steel, titanium, or ceramic matric composite. The fire-retardant layer 62 is formed as an intermediate layer within the podded engine adaptor 61. In other examples, the fire-retardant layer 62 may be formed as an outer layer of the podded engine adaptor 61, either on the side of the podded engine adaptor 61 facing the engine 33 or on the side of the podded engine adaptor 61 facing the airframe 42. In further examples, the podded engine adaptor 61 may be formed from a fire-retardant material, such that the podded engine adaptor 61 itself forms a fire-retardant layer 62. The fire-retardant layer 62 is disposed between the airframe 42 and the air intake 32, engine 33, and engine housing 34 of the podded engine assembly 60 when the podded engine adaptor 61 is mounted to the airframe 42 at the airframe mounting interface 37.

By incorporating a fire-retardant layer 62, the podded engine adaptor 61 forms a fire bulkhead separating the airframe 42 and the engine 33. This can prevent any fires which develop in the engine 33 from spreading to the airframe 42. As the fire-retardant layer 62 is part of the podded engine assembly 60, the airframe 42 is not required to have a separate fire-retardant layer or bulkhead. This means that when the podded engine assembly 60 is not installed on the airframe, the airframe 42 can be accessed more readily, which enables easier inspection of the airframe structure.

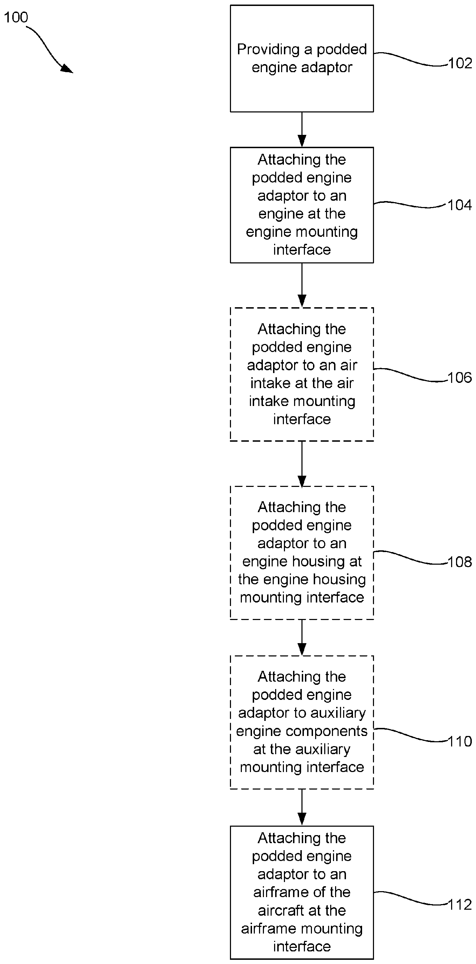

Figure 7 is a flow diagram illustrating a method 100 of mounting a podded engine to an aircraft according to the present disclosure. In a first step 102, the method comprises providing a podded engine adaptor. The podded engine adaptor may comprise any podded engine adaptor as described according to the present disclosure. In a second step 104, the method comprises attaching the podded engine adaptor to an engine at the engine mounting interface. Optionally, in a third step 106, the method may comprise attaching the podded engine adaptor to an air intake at the air intake mounting interface. Optionally, in a fourth step 108, the method may comprise attaching the podded engine adaptor to an engine housing at the engine housing mounting interface. Optionally, in a fifth step 110, the method may comprise attaching the podded engine adaptor to auxiliary engine components at the auxiliary mounting interface. In a sixth step 112, the method comprises attaching the podded engine adaptor to an airframe of the aircraft at the airframe mounting interface to indirectly couple the engine, and optionally the air intake, the engine housing, and the auxiliary engine components, to the aircraft via the podded engine adaptor.

The podded engine assembly of the present disclosure provides a simplified manner of attachment to a corresponding attachment interface on an aircraft airframe. This is achieved by the podded engine adaptor being attachable to the airframe, which removes the need for the air intake and engine to be individually attached to the airframe directly. In this way, installation of the podded engine assembly to the airframe can be made more efficient. The airframe mounting interface on the podded engine adaptor can be made standard across different podded engine adaptors, such that different podded engine adaptors are configured to attach to the airframe in the same way, in a modular manner. By packaging the air intake and the engine together within the podded engine assembly, they can be assessed together on a test bed for aircraft certification. In this way, the certification process can be simplified. As discussed above, the podded engine adaptor is configured to support the load of the air intake, the engine, and the engine housing, providing structural integrity to the podded engine assembly when not installed on the aircraft, for example during transport. The podded engine adaptor also distributes the load of the air intake, the engine, and the housing evenly through the airframe when the podded engine adaptor is attached to the airframe, reducing instances of point loading being exerted on the airframe.

Although it has been described in the above examples that the air intake and the engine inlet are not physically connected and are instead separated, in other examples, the air intake and the engine inlet may be physically connected together. In these and other examples, the air intake and the engine inlet may be connected together to the podded engine adaptor as a single unit.

Although it has been described in the above examples that the air intake and the housing are integrally formed, in other examples, the air intake and the housing may be separately formed and connected together.

Although it has been described in the above examples that the podded engine adaptor is formed as a plate, in other examples, the podded engine adaptor may be formed as any suitable shape which can support the load of the air intake, engine, and housing.

It will be understood that the disclosure is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. A podded engine adaptor (31) configured to secure a podded engine (30) to an aircraft (40), comprising:
an airframe mounting interface (37) configured for attachment to an airframe (42) of an aircraft (40);
an engine mounting interface (36) configured for attachment to an engine (33);
wherein the podded engine adaptor (31) is configured to be attached to an engine (33) at the engine mounting interface (36) and to an airframe (42) of the aircraft (40) at the airframe mounting interface (37), so as to indirectly couple an engine (33) to the aircraft (40) via the podded engine adaptor (31).

2. The podded engine adaptor (31) as claimed in Claim 1, further comprising:
an air intake mounting interface (35) configured for attachment to an air intake (32), wherein the podded engine adaptor (31) is configured to be attached to an air intake (32) at the air intake mounting interface (35), so as to indirectly couple an air intake (32) to the aircraft (40) via the podded engine adaptor (31).

3. The podded engine adaptor (31) as claimed in Claim 1 or Claim 2, further comprising:
an engine housing mounting interface (43) configured for attachment to an engine housing (34), wherein the podded engine adaptor (31) is configured to be attached to an engine housing (34) at the air intake mounting interface (35), so as to indirectly couple an engine housing (34) to the aircraft (40) via the podded engine adaptor (31).

4. The podded engine adaptor (31) as claimed in Claim 2 or Claim 3, wherein the podded engine adaptor (31) is configured such that, when the podded engine adaptor (31) is attached to an engine (33) at the engine mounting interface (36) and when the podded engine adaptor (31) is attached to an air intake (32) at the air intake mounting interface (35), the engine (33) and the air intake (32) are attached to the podded engine adaptor (31) independently of one another.

5. A podded engine adaptor (31) as claimed in any one of Claims 2 to 4, wherein the podded engine adaptor (31) is configured such that when the podded engine adaptor (31) is attached to an engine (33) at the engine mounting interface (36) and when the podded engine adaptor (31) is attached to an air intake (32) at the air intake mounting interface (35), an engine inlet of the engine (33) is physically separated from the air intake (32).

6. A podded engine adaptor (31) as claimed in any one of the preceding claims, wherein the podded engine adaptor (31) is configured to be movably attached to an engine (33) at the engine mounting interface (36) such that the engine (33) is configured for relative movement with respect to the podded engine adaptor (31).

7. A podded engine adaptor (31) as claimed in any one of the preceding claims, wherein the podded engine adaptor (31) has a substantially plate-like form, having a first surface comprising the airframe mounting interface (37) and a second surface arranged opposing the first surface, the second surface comprising the engine mounting interface; and
wherein the podded engine adaptor (31) is configured to be mounted to an underside of the airframe (42) at the airframe mounting interface (37).

8. A podded engine adaptor (31) as claimed in any one of the preceding claims further comprising a fire-retardant layer (62) configured such that when the podded engine adaptor (31) is attached to an engine (33) at the engine mounting interface (36) and to an airframe (42) of the aircraft (40) at the airframe mounting interface (37), the fire-retardant layer (62) separates the airframe (42) from the engine (33).

9. A podded engine adaptor (31) as claimed in any one of the preceding claims, further comprising an auxiliary mounting interface (54) configured for attachment to one or more auxiliary engine components (52), wherein the podded engine adaptor (31) is configured to be attached to one or more auxiliary engine components (52) at the auxiliary mounting interface (54) so as to indirectly couple one or more auxiliary engine components (52) to the aircraft (40) via the podded engine adaptor (31).

10. A podded engine assembly (30) for an aircraft (40), comprising:
a podded engine adaptor (31) as claimed in any one of the preceding claims;
an engine (33) attached to the engine mounting interface (36);
an air intake fluidly coupled to an engine inlet and attached to an air intake mounting interface (35); and
an engine housing (34) at least partially surrounding the engine (33) and attached to the engine housing mounting interface (43);
wherein the podded engine adaptor (31) is configured to be attached to an airframe (42) of the aircraft (40) at the airframe mounting interface (37) to indirectly couple the engine (33), the air intake (32), and the engine housing (34) to the aircraft (40).

11. The podded engine assembly (30) as claimed in Claim 10, wherein the air intake (32) is integrally formed with the engine housing (34).

12. An aircraft (40), comprising:
an airframe (42); and
a podded engine assembly (30) according to Claim 10 or Claim 11, wherein the podded engine adaptor (31) of the podded engine assembly (30) is attached to the airframe (42) at the airframe mounting interface (37) to couple the podded engine assembly (30) to the aircraft (40).

13. An aircraft (40) as claimed in Claim 12, wherein the airframe (42) comprises a fuselage of the aircraft (40), and wherein the airframe mounting interface (37) is configured to attach to the fuselage.

14. A method of mounting a podded engine to an aircraft (40), comprising:
providing a podded engine adaptor (31) as claimed in any one of Claims 1 to 9;
attaching the podded engine adaptor (31) to an engine (33) at the engine mounting interface (36); and
attaching the podded engine adaptor (31) to an airframe (42) of the aircraft (40) at the airframe mounting interface (37) to indirectly couple the engine (33) to the aircraft (40) via the podded engine adaptor (31).
